(19) Europäisches Patentamt
European Patent Office
Office européen des brevets

(11) EP 0 451 820 B1

(12) **EUROPÄISCHE PATENTSCHRIFT**

(45) Veröffentlichungstag und Bekanntmachung des Hinweises auf die Patenterteilung:
**07.02.1996 Patentblatt 1996/06**

(51) Int Cl.$^6$: **C09K 19/54**, C09K 19/56, G02F 1/137

(21) Anmeldenummer: **91105699.2**

(22) Anmeldetag: **10.04.1991**

(54) **Verfahren zur Herstellung einer schockstabilen Flüssigkristall-Schalt- und -Anzeigevorrichtung**

Process for manufacturing a shock-resistant liquid crystal switch and display

Procédé de fabrication de commutateurs et d'afficheurs à cristaux liquides, résistant aux chocs

(84) Benannte Vertragsstaaten:
**DE**

(30) Priorität: **12.04.1990 DE 4011805**

(43) Veröffentlichungstag der Anmeldung:
**16.10.1991 Patentblatt 1991/42**

(73) Patentinhaber:
**HOECHST AKTIENGESELLSCHAFT
D-65926 Frankfurt am Main (DE)**

(72) Erfinder:
- **Escher, Claus, Dr.
W-6109 Mühltal (DE)**
- **Illian, Gerhard, Dr.
W-6000 Frankfurt am Main (DE)**
- **Rösch, Norbert, Dr.
W-6000 Frankfurt am Main (DE)**
- **Harada, Takamasa
Inbagun, Chiba (DE)**

(56) Entgegenhaltungen:
**EP-A- 0 387 561**
**WO-A-90/15117**
**WO-A-91/08272**
**FR-A- 2 344 617**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Schalt- und Anzeigevorrichtungen, die ferroelektrische Flüssigkristall-Mischungen enthalten ("FLC-Lichtventile"), sind beispielsweise aus EP-B 0 032 362 (= US-A 4 367 924) bekannt. Flüssigkristallichtventile sind Vorrichtungen, die z.B. aufgrund elektrischer Beschaltung ihre optischen Transmissionseigenschaften derart ändern, daß durchfallendes (und gegebenenfalls wieder reflektiertes) Licht intensitätsmoduliert wird. Beispiele sind die bekannten Uhren- und Taschenrechneranzeigen oder Flüssigkristalldisplays im OA- (office automation) oder TV-(television) Bereich. Dazu zählen aber auch optische Verschlüsse, sogenannte "light shutter", wie sie z.B. in Kopiermaschinen, Druckern, Schweißbrillen, Polbrillen zur dreidimensionalen Betrachtung etc. eingesetzt werden. Auch sogenannte "spatial light modulators" zählen zum Anwendungsbereich von Flüssigkristall-Lichtventilen (siehe Liquid Crystal Device Handbook, Nikkan Kogyo Shimbun, Tokyo, 1989; ISBN 4-526-02590-9C 3054 und darin zitierte Arbeiten).

Die elektrooptischen Schalt- und Anzeigevorrichtungen sind so aufgebaut, daß die FLC-Schicht beiderseitig von Schichten eingeschlossen ist, die üblicherweise, in dieser Reihenfolge ausgehend von der FLC-Schicht, mindestens eine Orientierungsschicht, Elektroden und eine Begrenzungsscheibe (z.B. aus Glas) sind. Außerdem enthalten sie einen Polarisator, sofern sie im "guest-host"- oder im reflexiven Modus betrieben werden, oder zwei Polarisatoren, wenn als Modus die transmissive Doppelbrechung ("birefringence mode") genutzt wird. Die Schalt- und Anzeigeelemente können gegebenenfalls weitere Hilfsschichten wie z.B. Diffusionssperr- oder Isolationsschichten enthalten.

Solche Orientierungsschichten bringen, gemeinsam mit einem hinreichend klein gewählten Abstand der Begrenzungsscheiben, die FLC-Moleküle der FLC-Mischung in eine Konfiguration, bei der die Moleküle mit ihren Längsachsen parallel zueinander liegen und die smektischen Ebenen senkrecht oder schräg zur Orientierungsschicht angeordnet sind. In dieser Anordnung haben die Moleküle bekanntlich zwei gleichwertige Orientierungen, zwischen denen sie durch pulsartiges Anlegen eines elektrischen Feldes geschaltet werden können, d.h. FLC-Displays sind bistabil schaltbar. Die Schaltzeiten sind umgekehrt proportional zur spontanen Polarisation der FLC-Mischung und liegen im Bereich von µs.

Als Hauptvorteil der FLC-Displays gegenüber den in der industriellen Praxis bisher im wesentlichen noch anzutreffenden LC-Displays wird das erreichbare Multiplex-Verhältnis angesehen, d.h. die maximale Zahl der im zeitlichsequentiellen Verfahren ("Multiplex-Verfahren") ansteuerbaren Zeilen, das bei FLC-Displays im Gegensatz zu herkömmlichen LC-Displays praktisch unbegrenzt ist. Diese elektrische Ansteuerung basiert im wesentlichen auf der vorstehend genannten und in SID 85 DIGEST p. 131 (1985) beispielhaft beschriebenen Pulsadressierung.

Ein bekanntes Problem von FLC-Displays ist die Empfindlichkeit der Orientierung des flüssigkristallinen Materials in der Flüssigkristallschicht gegenüber mechanisch oder thermisch bedingten Deformationen (siehe z.B. S.T. Lagerwall et al., Ferroelectrics 94, 3-65 (1989)) - meist unter dem Begriff Schockinstabilität beschrieben.

Die Ursache dieses, für nematische Displays nicht relevanten Problems liegt in einer inherenten Eigenschaft ferroelektrischer Flüssigkristalle - der Existenz der smektischen Lagenstruktur. Die hohe Fließviskosität verhindert ein spontanes Ausheilen von durch äußere Kräfte verursachten Störungen der geeigneten Lagenstruktur. Im allgemeinen läßt sich die ursprüngliche Geometrie nur durch Aufheizen des Displays in die nematische oder isotrope Phase wiederherstellen, was vergleichsweise hohe Temperaturen erfordert und technisch aufwendig ist.

Da die Ursache für die Schockinstabilität in den oben beschriebenen intrinsischen Eigenschaften von smektischen Flüssigkristallen begründet ist, wurde dieses Problem bislang als besonders schwerwiegend angesehen.

Die bisherigen Versuche, das Schockproblem zu lösen, beruhen darauf, mögliche Deformationen zu vermeiden, indem man eine stabilere Displaystruktur konstruiert (z.B. Einsatz von strukturierten Photolackspacern (Leti, Frankreich)) - oder das Display in einem elastischen Rahmen aufhängt (CANON, Japan). Nachteilig sind hierbei die höheren Herstellungskosten für ein solches Display und der Umstand, daß starke Krafteinwirkungen trotzdem zu einer Zerstörung der smektischen Lagen führen.

Es wurde nun überraschend gefunden, daß es bei Einsatz von Schalt- und Anzeigevorrichtungen mit einer FLC-Mischung, die einen Coronanden oder Kryptanden enthält, möglich ist, das FLC-Material in eine homogene "bookshelf"- oder "quasi-bookshelf"-Geometrie zu bringen (siehe Dübal et al., Proc. 6th Intl. Symp. on Electrets, Oxford, England 1988; Y. Sato et al., Jap. J. Appl. Phys. 28, L 483 (1989)). Diese Struktur ist resistenter gegenüber der Einwirkung von Deformationen als die sogenannte "Chevron-Geometrie" mit' gewinkelten smektischen Lagen.

Die Erfindung betrifft somit ein Verfahren zur Herstellung einer schockstabilen Flüssigkristall-Schalt- und -Anzeigevorrichtung, wobei man zwei Trägerplatten, von denen mindestens eine eine Orientierungsschicht aufweist, mit mindestens einem Polarisator versieht und in den Zwischenraum zwischen den beiden Trägerplatten ein flüssigkristallines Material einfüllt, wobei als flüssigkristallines Material eine ferroelektrische Flüssigkristallmischung eingesetzt wird, die mindestens eine flüssigkristalline Grundkomponente und ferner mindestens einen Kryptanden oder Coronanden enthält, und man an die Elektroden der Schalt-und Anzeigevorrichtung vor Inbetriebnahme eine kontinuierliche periodische elektrische Spannung solange anlegt, bis die Flüssigkristallschicht eine "bookshelf"- oder "quasibookshelf"-Orientierung annimmt.

Als Kryptanden bzw. Coronanden werden bevorzugt folgende Verbindungen der allgemeinen Formel (I) oder (II) eingesetzt:

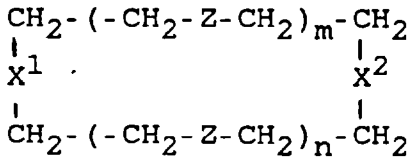

(I)

wobei

-Z- -O- oder -S- und
m, n ganze Zahlen größer Null bedeuten wobei m+n = 2 bis 6 ist,
$-X^1-$, $-X^2-$ gleich oder verschieden
-Z- , -NR- ,

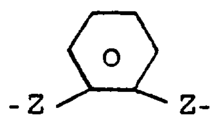 , 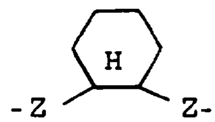

oder
$-X^1-$, $-X^2-$ zusammen

$>N-CH_2(-CH_2-Z-CH_2)_l-CH_2-N<$ ,

oder

$>N-CO(-CH_2-Z-CH_2)_l-CO-N<$

sind,
wobei

-R -Alkyl oder -Alkanoyl mit 1 bis 15 C-Atomen, -Phenyl, -Benzyl oder -Benzoyl und
l 1 oder 2 bedeuten;

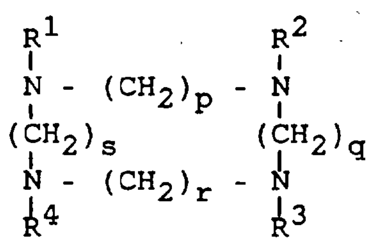

(II)

wobei $-R^1$, $-R^2$, $-R^3$ und $-R^4$ unabhängig voneinander

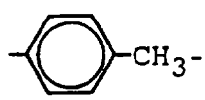

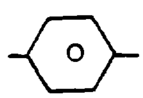, -H, $-CH_3$, 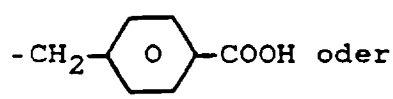 oder 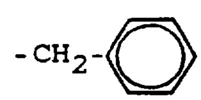

bedeuten
und p, q, r, sunabhängig voneinander eine ganze Zahl von 2 bis 4, wobei p+q+r+s = 8 bis 16, ist.

Bevorzugt werden ferner solche Verbindungen der Formel (I) eingesetzt, bei denen

Z ein Sauerstoffatom,
m, n ganze Zahlen größer Null bedeuten und
m+n = 2 bis 4 ist,

$-X^1-$, $-X^2-$ gleich oder verschieden

-O- , -NR- ,

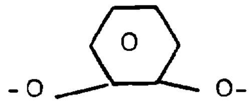 , 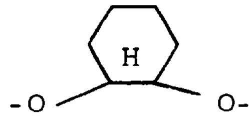

oder
$-X^1-$, $-X^2-$ zusammen

$$>N-CH_2(-CH_2-O-CH_2)_l-CH_2-N<$$ sind,

wobei

-R -Alkyl oder -Alkanoyl mit 1 bis 15 C-Atomen, -Phenyl, -Benzyl oder -Benzoyl und
l 1 oder 2 bedeuten.

Von den Verbindungen der Formel (II) werden solche bevorzugt eingesetzt, bei denen $-R^1 = -R^2 = -R^3 = -H$ und $R^4$ gleich -H,

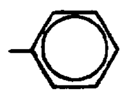 ,

$-CH_3$; oder

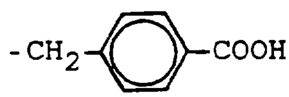

bedeuten.

Von den Verbindungen der allgemeinen Formeln (I) und (II) sind vorzugsweise 0,01 bis 10 Mol-% in der FLC-Mischung enthalten. Bevorzugt sind in der Mischung auch mehrere verschiedene Verbindungen der allgemeinen Formel (I) und/ oder (II) enthalten, wobei jedoch der Gesamtgehalt bevorzugt bei 0,01 bis 10 Mol-% liegt.

Zur Erzeugung einer "bookshelf" oder "quasibookshelf"-Geometrie legt man in der ferroelektrischen Phase an die Elektroden bevorzugt eine periodische Rechteckspannung mit einer Frequenz von 1 bis 1000 Hz und einer Feldstärke von 0,5 bis 50 V/µm über einen Zeitraum von 0,1 Sekunden bis 10 Minuten an. Dabei wählt man eine umso höhere Frequenz und umso kleinere Feldstärke, je größer die Spontanpolarisation und je höher die Temperatur ist, bei der die Feldbehandlung durchgeführt wird.

Besonders bevorzugt wird eine Ausführungsform der Erfindung, bei der man an die Elektroden über einen Zeitraum von 1 Sekunde bis 2 Minuten eine periodische Rechteckspannung mit einer Feldstärke von 5 bis 20 V/µm und einer Frequenz von 2 bis 50 Hz anlegt.

Besonders bevorzugt ist ferner, daß die Feldbehandlung mit der periodischen Rechteckspannung am Arbeitstemperaturpunkt oder in einem engen Temperaturintervall (±10°C) um den bevorzugten Arbeitstemperaturpunkt vorgenommen wird.

Als besonderer Vorteil des erfindungsgemäßen Verfahrens erweist sich, daß man dennoch schockgeschädigte Displays bei Verwendung der genannten FLC-Mischungen auf einfache und auch im Normalbetrieb bei Kunden fallweise oder routinemäßig vorzunehmende Weise - nämlich durch kurzzeitige Behandlung mit einem geeigneten elektrischen Feld - wieder in den Ausgangszustand zurückversetzen kann.

In einer besonderen Ausführungsform der Erfindung enthält die Schalt- und Anzeigevorrichtung ein zusätzliches (Bau)element, welches das Anlegen der kontinuierlichen periodischen Rechteckspannung im routinemäßigen Betrieb ermöglicht bzw. vereinfacht.

Die Erfindung betrifft somit auch ein Verfahren zum Regenerieren einer schockgeschädigten Flüssigkristall-Schalt- und -Anzeigevorrichtung, die zwei Trägerplatten, mindestens eine Orientierungsschicht, einen Kleberahmen, Elektroden, mindestens einen Polarisator und ein flüssigkristallines Material enthält, und in der die Flüssigkristallschicht ursprünglich (d. h. vor der Schock-Schädigung) in einer "bookshelf"- oder "quasibookshelf"-Orientierung vorlag, wobei man eine Flüssigkristallschicht aus einer ferroelektrischen Flüssigkristallmischung, die aus mindestens einer flüssigkristallinen Grundkomponente und ferner mindestens einem Coronanden oder Kryptanden besteht, eingesetzt hat und man an die Elektroden der schockgeschädigten Schalt- und Anzeigevorrichtung eine kontinuierliche, periodische Spannung anlegt.

Bevorzugt werden auch hierzu die oben genannten speziellen FLC-Mischungen in der Schalt- und Anzeigevorrichtung eingesetzt. Die an den Elektroden des gefrier- oder stoßgeschädigten Displays angelegte Spannung ist vorzugsweise eine Rechteckspannung und hat vorzugsweise eine Frequenz von 1 bis 1.000 Hz, insbesondere von 2 bis 50 Hz und eine elektronische Feldstärke von 0,5 bis 50, insbesondere von 5 bis 20 V/µm.

Zum Regenerieren legt man die Spannung vorzugsweise für einen Zeitraum vom 0,1 Sekunden bis zu 10 Minuten, im besonderen für 1 Sekunde bis zu 2 Minuten an. Zu langes Anlegen einer Spannung ist aus wirtschaftlichen Gründen wenig vorteilhaft.

Ein weiteres Problem für die Anwendung ferroelektrischer Flüssigkristalle in FLC-Displays besteht darin, daß die Mindesttemperatur, bei der diese Displays gelagert werden können, zu hoch liegt, d.h., daß z.B. tiefe Temperaturen (wie sie z.B. im Flugzeug auftreten können) ebenfalls zu Schädigungen u.a. der Textur führen. Kristallisiert das flüssigkristalline Material im Display aus, so verliert das Display nach dem Wiederaufschmelzen seine guten Schalteigenschaften. Erst eine Erwärmung bis zur cholesterischen oder isotropen Phase und anschließendes Abkühlen auf die Arbeitstemperatur stellt das ursprüngliche Schaltverhalten des FLC-Displays wieder her.

Im Hinblick darauf erweist sich das erfindungsgemäße Verfahren, wie bereits oben beschrieben, als besonders vorteilhaft. Es hat sich gezeigt, daß eingefrorene und wieder aufgeschmolzene FLC-Displays, die mit den oben beschriebenen FLC-Mischungen gefüllt sind, auch ohne ein Aufheizen auf Temperaturen über dem Arbeitstemperaturbereich durch kurzzeitige Behandlung mit einem kontinuierlichen periodischen elektrischen Feld wieder in den ursprünglichen, gut schaltenden Zustand (mit hohem Kontrast) zurückversetzt werden können.

Die dem erfindungsgemäßen Verfahren zugrundeliegenden FLC-Lichtventile enthalten eine ferroelektrische flüssigkristalline Mischung (FLC-Mischung), die mindestens einen Coronanden und/oder Kryptanden enthält.

Unter den beim erfindungsgemäßen Verfahren verwandten FLC-Lichtventilen werden Schaltvorrichtungen, die im Multiplexverfahren angesteuert werden, bevorzugt. Besonders bevorzugt werden Flüssigkristallzellen, die in SSFLC-Technik ("surface stabilized ferroelectric liquid crystal") arbeiten und bei denen die Schichtdicke (d.h. Abstand der Begrenzungsscheiben) 1 bis 20 µm beträgt. Besonders bevorzugt ist eine Schichtdicke von 1 bis 10 µm, insbesondere von 1,2 bis 3 µm.

Die FLC-Mischung weist bevorzugterweise im Arbeitstemperaturbereich eine $S_c$ *-Phase auf und die Phasenfolge der Mischung lautet: I-N*-$S_A$*-$S_c$*, oder I-N*-$S_c$*.

Die Erfindung wird durch die nachfolgenden Beispiele 1 bis 4 näher erläutert.

**Beispiel 1**

Es wird eine flüssigkristalline Grundmischung aus folgenden 8 Komponenten hergestellt (Angaben in Mol-%):

13,39 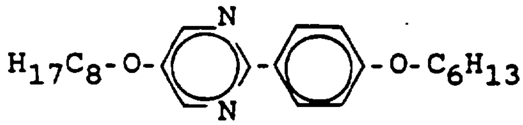

4,49 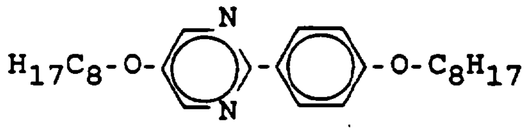

14,78 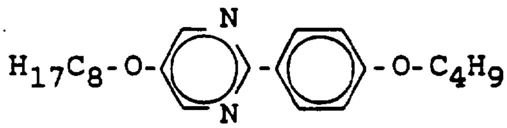

8,14 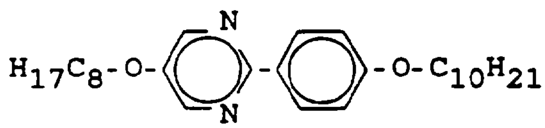

8,16 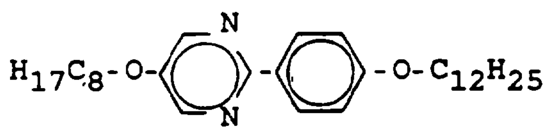

19,04 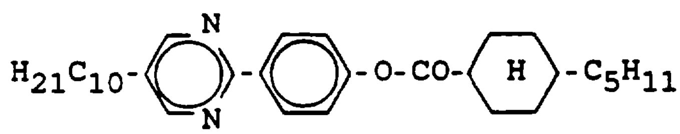

12,00 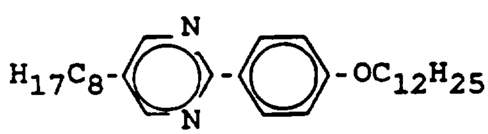

20,00 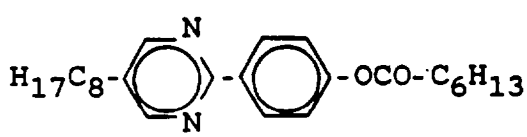

Die Mischung zeigt folgende Phasenfolge:

$S_c$ 71 $S_A$ 78 N 93 I.

Als chirale Dotierstoffe werden folgende Verbindungen eingesetzt:

**Dotierstoff D1**

(S) 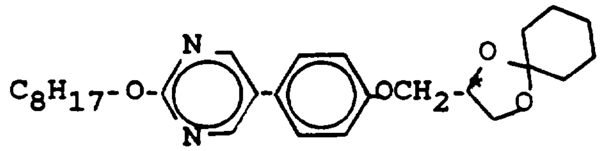

**Dotierstoff D2**

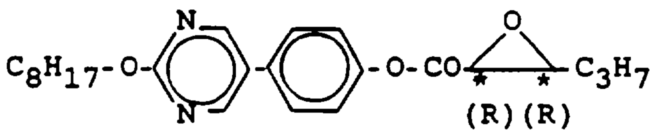

(R)(R)
cis

**Dotierstoff D3**

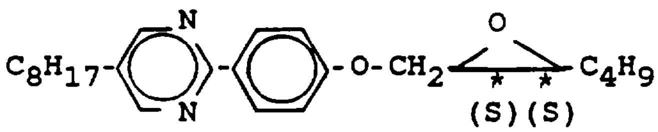

(S)(S)
trans

Eine Vergleichsmischung (V) (für die nachfolgenden Versuche) weist folgende Zusammensetzung auf (in Mol-%):

| (V) | |
|---|---|
| Grundmischung | 87,67 |
| Dotierstoff D1 | 4,53 |
| Dotierstoff D2 | 2,70 |
| Dotierstoff D3 | 5,10 |

und hat die Phasenfolge $S_c$* 61 $S_A$* 69 N* 85 I bei einer spontanen Polarisation von 30 $nC \cdot cm^{-2}$ bei 25°C.

Als Coronand (C) bzw. Kryptand (K) werden die beiden folgenden Verbindungen eingesetzt:

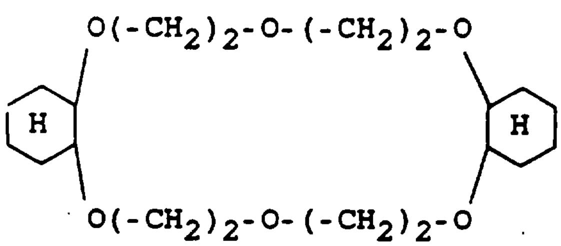

(C)

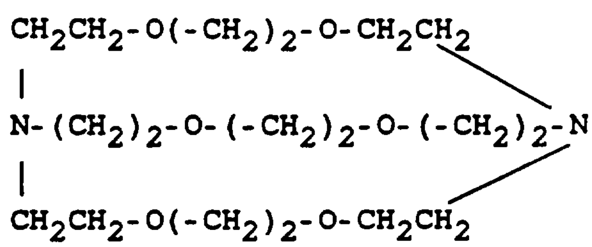

(K)

Als eine beispielhafte, dem erfindungsgemäßen Verfahren zugrundeliegende FLC-Mischung wird die Mischung X mit folgender Zusammensetzung (in Mol-%) hergestellt:

| (X) | |
|---|---|
| 98,0 | Vergleichsmischung (V) |
| 1,5 | Coronand (C) |
| 0,5 | Kryptand (K) |

Als zweite FLC-Mischung, die einen Kryptanden und/oder Coronanden enthält, wird die Mischung Y hergestellt. Sie besitzt folgende Zusammensetzung (in Mol-%):

**(Y)**

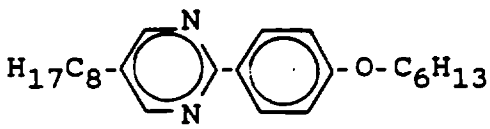

14,6

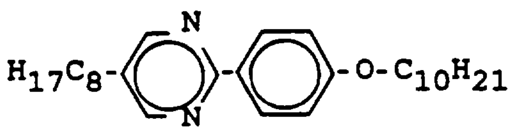

9,7

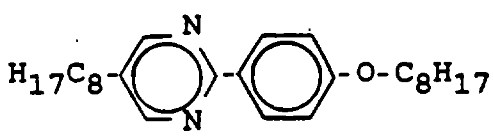

13,1

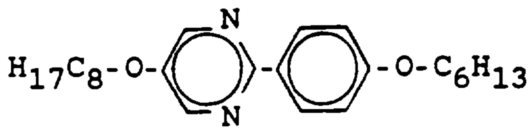
9,1

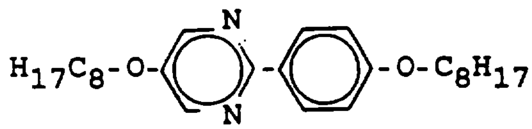
4,2

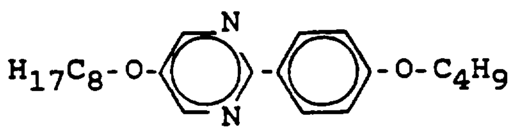
9,6

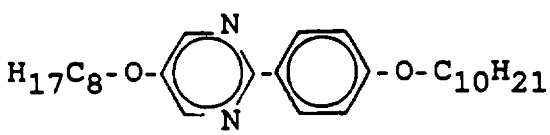
7,7

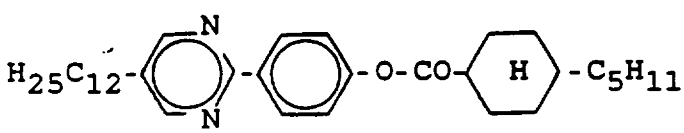
14,4

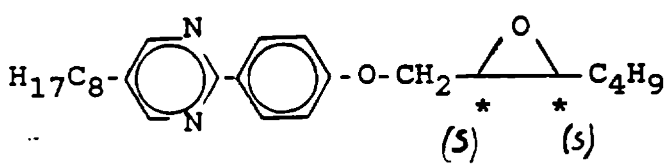
5,7

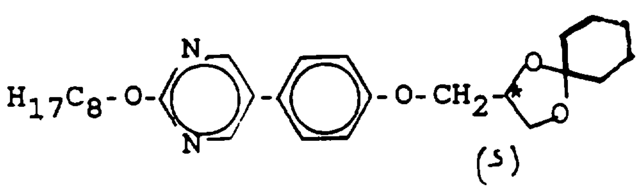
3,4

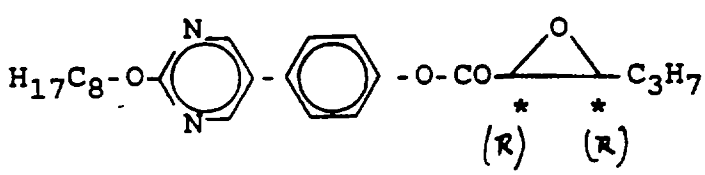
6,5

Coronand (C) 1,5

Kryptand (K) 0,5

Sie weist bei einer Temperatur von 25°C eine spontane Polarisation von 31 nC·cm$^{-2}$ auf und besitzt folgende Phasenfolge:

X -3 $S_c$ 64 $S_A$ 72 N 83 I

**Beispiel 2**

Die oben beschriebene Methode der feldinduzierten Texturänderung wird auf die dem erfindungsgemäßen Verfahren zugrundeliegende Mischung aus Beispiel 1 und auf die Vergleichsmischung V angewandt.

Auf eine 2 µm dicke kommerziell erhältliche LC-Zelle (Hersteller E.H.C. & Co., Ltd., Tokyo, Japan) mit parallel geriebenem Polyimid (PIX 1400 der Firma Hitachi Ltd., Tokyo, Japan) als Orientierungsschicht wird eine periodische Rechteckspannung mit 25 Volt Amplitude und einer Frequenz von 10 Hz bei Raumtemperatur appliziert.

Mikroskopische Aufnahmen (125-fache Vergrößerung) der resultierenden "quasi-bookshelf"-Geometrie für die Mischung X bzw. die Vergleichsmischung V sind in Fig. 1a bzw. Fig. 1b dargestellt. Deutlich ist hierbei die makroskopisch inhomogene Textur in Fig. 1b und die mikroskopisch charakteristisch streifige, jedoch makroskopisch uniforme Textur in Fig. 1a zu erkennen. Ein Beschalten mit bipolaren Pulsen (wie es üblicherweise in Multiplexschemata auftritt) ergibt die in Fig. 2a und 2b gezeigten optischen Transmissionskurven für die FLC-Mischung X bzw. die Vergleichsmischung. Die optische Transmission wurde gemessen, indem die Zelle, wie in der SSFLC-Technik üblich, zwischen zwei gekreuzten Polarisatoren geeignet positioniert wurde. Einem hohen Kontrast (von ca. 30 : 1) bei der Mischung X (Fig. 2a) steht ein geringer Kontrast (von ca. 3 : 1) bei der Vergleichsmischung (Fig. 2b) gegenüber.

**Beispiel 3**

Für einen Nachweis der besonderen Eigenschaften der bei dem erfindungsgemäßen Verfahren eingesetzten FLC-Mischungen bezüglich der Möglichkeit, eine auskristallisierte und wieder aufgeschmolzene Flüssigkristallmischung (temperaturgeschädigte Schalt- und Anzeigevorrichtung) durch eine Behandlung mit einem elektrischen Feld so zu regenerieren, daß das ursprüngliche vorteilhafte Schaltverhalten (der hohe optische Kontrast) wieder auftritt, werden die in Beispiel 1 beschriebenen FLC-Mischungen X und Y und die Vergleichsmischung V jeweils in 2 µm dicke Abstände aufweisende Flüssigkristallzellen gefüllt, die mit einer 20 nm dicken Polyimidschicht (als Orientierungsschicht) versehen sind. Die Zellen werden einer 3-minütigen Behandlung mit einer kontinuierlichen Rechteckspannung einer Frequenz von 10 Hz und einer Amplitude von 20 V unterzogen.

Beim anschließenden Anlegen von bipolaren Schaltpulsen (z.B. der Feldstärke 8 $V \cdot \mu m^{-1}$ und einer Pulsbreite von 0,5 msec) bewegt sich der Direktor (Orientierung der Molekülachsen) je nach dem Vorzeichen der angewandten bipolaren Pulse in zwei stabile Positionen, die um den Schaltwinkel 2 $\theta_{eff}$ zueinander geneigt sind. Die Zelle wird auf eine Temperatur von 25°C thermostatisiert und unter einem Polarisationsmikroskop so justiert, daß einer der beiden Zustände eine möglichst niedrige Transmission und der andere Schaltzustand eine hohe Transmission aufweist. Die in Tabelle 1 aufgeführten Werte der optischen Transmission beziehen sich auf die maximale Transmission von Licht durch die FLC-Zelle bei einer parallen Stellung der Polarisatoren. In Tabelle 1 zeigen die angegebenen Werte für die in Beispiel 1 aufgeführten FLC-Mischungen mit Coronanden bzw. Kryptanden die hohe Qualität der Orientierung im Dunkelzustand (geringe Transmission, $T_d$) sowie den vorteilhaft großen Schaltwinkel (2 $\theta_{eff}$) , welcher zu einer hohen Transmission im Hellzustand (maximale Transmission, $T_h$) führt (siehe Tabelle 1, a).

Beide Zellen weisen nach der thermischen Schockbehandlung (Kristallisation und nachfolgendes Aufschmelzen) eine Verschlechterung der Transmission und damit des Kontrastes auf (siehe Tabelle 1, b).

Der Vergleich zwischen den Messungen bei a und b zeigt, daß der Kontrast um Werte zwischen 23 und 32 % sinkt. Ein entscheidender Vorteil der FLC-Mischungen, die Kryptanden bzw. Coronanden enthalten, liegt darin, daß durch eine erneute Behandlung mit einem elektrischen Feld (wie oben beschrieben) eine Erhöhung des Kontrastes in den Zellen möglich wird. Beim Vergleich der Messungen c mit b läßt sich erkennen, daß der Kontrast durch die Feldbehandlung nunmehr um 24 bis 29 % gesteigert werden kann und somit ungefähr dem Kontrast der ursprünglichen Zelle (vor Auskristallisation des FLC-Materials) entspricht.

Eine schockgeschädigte Schalt- und Anzeigevorrichtung, die eine FLC-Mischung mit Kryptand und/oder Coronand enthält, kann also durch das Anlegen einer einfachen kontinuierlichen Wechselspannung so regeneriert werden, daß es die Qualität der ursprünglichen Vorrichtung wiedererhält.

Tabelle 1

| Bsp. Nr. | Zelldicke [µm] | Schaltwinkel $2\theta$ [°] | relative Lichttransmission Dunkelzustand $T_d$ | Hellzustand $T_h$ | Kontrast $T_h/T_d$ | Bemerkungen |
|---|---|---|---|---|---|---|
| a | 1,30 | 50 | 1,1 | 70,9 | 64 | frisch orientierte feldbehandelte FLC-Zelle (mit FLC-Mischung X) |
| b | 1,30 | 50 | 1,6 | 70,3 | 44 | gleiche FLC-Zelle nach Kristallisation und Aufschmelzen der Mischung |
| c | 1,30 | 50 | 1,2 | 70,1 | 58 | gleiche FLC-Zelle nach Kristallisation, Aufschmelzen und Feldbehandlung |
| a | 1,31 | 46 | 0,79 | 76,3 | 96 | frisch orientierte feldbehandelte FLC-Zelle (mit FLC-Mischung Y) |
| b | 1,31 | 46 | 0,96 | 70,7 | 74 | gleiche FLC-Zelle nach Kristallisation und Aufschmelzen der Mischung |
| c | 1,31 | 46 | 0,67 | 70,7 | 105 | gleiche FLC-Zelle nach Kristallisation, Aufschmelzen und anschließender Feldbehandlung |

**Beispiel 4**

Das folgende Beispiel demonstriert zum einen die größere Schockresistenz der feldinduzierten "quasi-bookshelf"-Geometrie gegenüber mechanischer Deformation im Vergleich zur "Chevron"-Geometrie und zum anderen die Möglichkeit, eine durch mechanische Einwirkungen geschädigte "quasi-bookshelf"-Geometrie durch erneute Feldbehandlung wieder auszuheilen.

Zur vergleichenden Untersuchung des Verhaltens von Schalt-und Anzeigevorrichtungen gegenüber mechanischer Deformation wird die in Fig. 5a und 5b dargestellte kommerziell erhältliche Testzelle (vom Hersteller E.H.C.) mit der erfindungsgemäßen Mischung X gefüllt. Die Zelle besitzt Abstandshalter (G) nur im Kleberahmen (G) und ist deshalb durch Druckeinwirkung in der Mitte der Zelle leicht deformierbar. Fig. 5a zeigt die Zelle in Seitenansicht. In Fig. 5b wird die gesamte Zelle (22 x 25 mm) in Aufsicht gezeigt, wobei der Druckpunkt (I) und das Schaltfeld (4 x 4 mm) (H) besonders hervorgehoben sind.

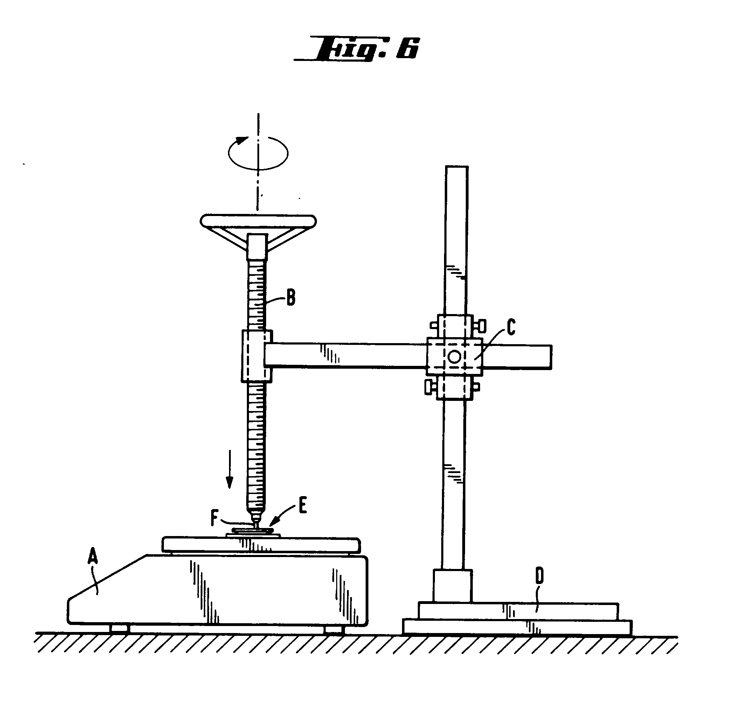

Die Zelle (E) wird, wie in Fig. 6 gezeigt, auf eine Waage (A) gelegt und mittels einer an einem Stativ (D) mit Stativmuffe (C) befestigten Schraubvorrichtung (B) von oben her mit einem Stempel (F) mit Durchmesser 1,5 mm für 10 Sekunden zusammengedrückt. Die Stempelkraft wird mit Hilfe der Waagenanzeige definiert eingestellt und variiert. Vor und nach den Belastungen werden Textur und Schaltverhalten der Zelle genau unter dem Druckpunkt (Durchmesser = 1,5 mm) (I) mikroskopisch überprüft.

Fig. 3b zeigt mikroskopische Photographien der Textur in "Chevron"-Geometrie in 125-facher Vergrößerung ohne Belastung (bl) und nach verschieden starken Belastungen (b2) bis (b5); (b1 = 0 g; b2 = 200 g; b3 = 300 g;b4 = 400 g; b5 = 500 g).

Deutlich erkennbar ist hier eine Texturveränderung nach einer Belastung von 400 g. Dies wird auch aus dem verminderten Kontrast beim Beschalten mit bipolaren Pulsen deutlich (siehe Tabelle 2).

Eine Wiederherstellung der ursprünglichen Textur und des ursprünglichen Kontrastes ist nur durch Aufheizen in die cholesterische oder isotrope Phase, d. h. bei Anwendung hoher Temperaturen, möglich.

Bringt man hingegen die Vorrichtung, die eine Mischung enthält, die Coronanden und/oder Kryptanden enthält, durch Behandlung mit einem elektrischen Feld, wie oben beschrieben, in eine "quasi-bookshelf"-Geometrie und führt dann die mechanischen Belastungstests durch, so zeigen die in 125-facher Vergrößerung aufgenommenen Photographien (Fig. 3a), daß sich hier erst ab einer Belastung von 600 g wesentliche Texturveränderungen ergeben (a1 = 0 g; a2 = 400 g; a3 = 500 g; a4 = 600 g; a5 = 1.000 g). Dies spiegelt sich auch in den in Tabelle 3 dargestellten Kontrastwerten wider.

**Beispiel 5**

Die mit 1.000 g belastete Zelle aus Beispiel 4 (siehe Fig. 3 (a5)) wird einer elektrischen Feldbehandlung unterzogen (wie sie bereits vorher benutzt worden war, um die "Chevron"-Geometrie in die "quasi-bookshelf"-Geometrie umzuwandeln). Überraschend wird festgestellt, daß sich auch eine so stark geschädigte Zelle (siehe Fig. 4(a), entspricht Fig. 3 (a5)) wieder vollständig regenerieren läßt (Fig. 4(b)).

Dies wird auch durch eine Kontrastmessung belegt, die für die geschädigte Zelle (Fig. 4(a)) einen Kontrast von 8 : 1 und für die regenerierte Zelle einen Kontrast von 75 : 1 ergab.

Der Vergleich mit dem Kontrast der Zelle vor der Belastung (Tabelle 3) zeigt, daß die Zelle auch in ihrer optischen Charakteristik durch die Feldbehandlung wieder vollständig regeneriert werden kann.

Tabelle 2

| Kontrast einer Schalt- und Anzeigevorrichtung nach Belastung mit einer Gewichtskraft (in "Chevron"-Geometrie) | |
|---|---|
| Belastung (g) | Kontrast |
| 0 | 13,4 |
| 100 | 13,3 |
| 200 | 13,7 |
| 300 | 13,7 |
| 400 | 10,5 |
| 500 | 10,0 |
| 600 | 9,8 |
| 700 | 7,2 |

Tabelle 3

| Kontrast einer Schalt- und Anzeigevorrichtung nach Belastung mit einer Gewichtskraft (in "quasibookshelf"-Geometrie) | |
|---|---|
| Belastung (g) | Kontrast |
| 0 | 68,0 |
| 200 | 67,7 |
| 300 | 67,7 |
| 400 | 71,1 |
| 500 | 73,0 |
| 600 | 11,1 |
| 700 | 11,0 |
| 800 | 9,4 |
| 1.000 | 8,0 |

**Patentansprüche**

**1.** Verfahren zur Herstellung einer schockstabilen Flüssigkristall-Schalt- und -Anzeigevorrichtung, wobei man zwei miteinander verbundene Trägerplatten, von denen mindestens eine eine Orientierungsschicht aufweist, mit Elektroden und mindestens einem Polarisator versieht und in den Zwischenraum zwischen den beiden Trägerplatten ein flüssigkristallines Material einfüllt, dadurch gekennzeichnet, daß als flüssigkristallines Material eine ferroelektrische Flüssigkristallmischung eingesetzt wird, die mindestens eine flüssigkristalline Grundkomponente und ferner mindestens einen Kryptanden oder Coronanden enthält, und man an die Elektroden der Schalt- und Anzeigevorrichtung vor Inbetriebnahme in der ferroelektrischen Phase eine kontinuierliche periodische elektrische Spannung solange anlegt, bis die Flüssigkristallschicht eine "bookshelf"- oder "quasibookshelf"-Orientierung annimmt.

**2.** Verfahren gemäß Anspruch 1, dadurch gekennzeichnet, daß die eingesetzte Flüssigkristallmischung mindestens einen Kryptanden oder Coronanden der allgemeinen Formel (I) oder (II) enthält

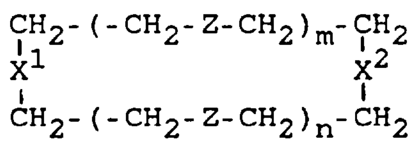

(I)

wobei

-Z- gleich -O- oder -S- und
m, n ganze Zahlen größer Null bedeuten und m+n = 2 bis 6 ist,
$-X^1-$, $-X^2-$ gleich oder verschieden
-Z- , -NR- ,

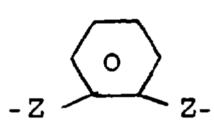 , 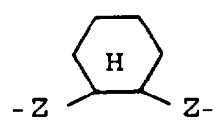

oder
$-X^1-$, $-X^2-$ zusammen

$$>N-CH_2(-CH_2-Z-CH_2)_l-CH_2-N< ,$$

oder

$$>N-CO(-CH_2-Z-CH_2)_l-CO-N< \text{ sind,}$$

wobei

-R -Alkyl oder -Alkanoyl mit 1 bis 15 C-Atomen, -Phenyl, -Benzyl oder -Benzoyl und
l 1 oder 2 bedeuten;

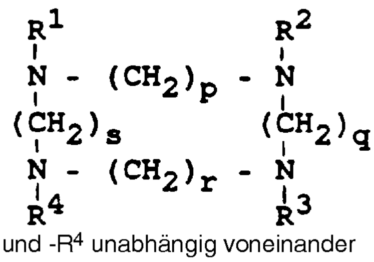 (II)

wobei $-R^1$, $-R^2$, $-R^3$ und $-R^4$ unabhängig voneinander

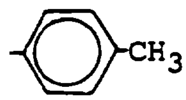

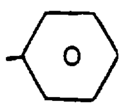 , -H, $-CH_3$, 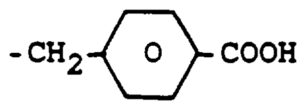 oder 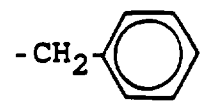

bedeuten

und p, q, r, s unabhängig voneinander eine ganze Zahl von 2 bis 4, wobei p+q+r+s = 8 bis 16, ist, und

man an die Elektroden eine periodische Rechteckspannung einer Frequenz von 1 bis 1000 Hz und einer Feldstärke von 0,5 bis 50 V/µm über einen Zeitraum von 0,1 Sekunden bis 10 Minuten anlegt.

**3.** Verfahren gemäß Anspruch 2, dadurch gekennzeichnet, daß die eingesetzte Flüssigkristallmischung eine Verbindung der Formel (I) enthält, wobei

Z ein Sauerstoffatom ist,
m, n ganze Zahlen größer Null bedeuten und m+n = 2 bis 4 ist,
$-X^1-$, $-X^2-$ gleich oder verschieden
-O- , -NR ,

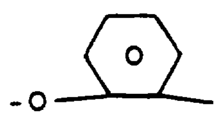 , 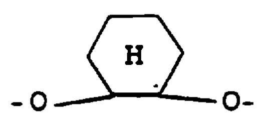

oder
$-X^1-$, $-X^2-$ zusammen

$>N-CH_2(-CH_2-O-CH_2)_1-CH_2-N<$ sind,

wobei

-R -Alkyl oder -Alkanoyl mit 1 bis 15 C-Atomen, -Phenyl, -Benzyl oder -Benzoyl und
l 1 oder 2 bedeuten.

**4.** Verfahren gemäß Anspruch 2, dadurch gekennzeichnet, daß die eingesetzte Flüssigkristallmischung eine Verbindung der Formel (II) enthält, wobei
$-R^1 = -R^2 = -R^3 = -H$ und $R^4$ gleich -H,

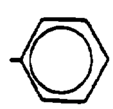 ,

$-CH_3$ oder

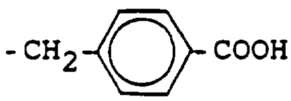

bedeuten.

**5.** Verfahren gemäß Anspruch 2, dadurch gekennzeichnet, daß man an die Elektroden über einen Zeitraum von 1 Sekunde bis 2 Minuten eine periodische Rechteckspannung mit einer Feldstärke von 5 bis 20 V/µm und einer Frequenz von 2 bis 50 Hz anlegt.

**6.** Verfahren zum Regenerieren einer schockgeschädigten Flüssigkristall-Schalt- und -Anzeigevorrichtung, die zwei Trägerplatten, mindestens eine Orientierungsschicht, einen Kleberahmen, Elektroden, mindestens einen Polarisator und ein flüssigkristallines Material enthält, und in der die Flüssigkristallschicht ursprünglich in einer "bookshelf"- oder "quasibookshelf" - Orientierung vorlag, dadurch gekennzeichnet, daß eine Flüssigkristallschicht aus einer ferroelektrischen Flüssigkristallmischung, die aus mindestens einer flüssigkristallinen Grundkomponente und ferner wenigstens einem Coronanden oder Kryptanden besteht, eingesetzt wird, und man an die Elektroden der schockgeschädigten Schalt- und Anzeigevorrichtung eine kontinuierliche, periodische Rechteckspannung anlegt.

**7.** Verfahren gemäß Anspruch 6, dadurch gekennzeichnet, daß man an die Elektroden über einen Zeitraum von 0,1 Sekunden bis 10 Minuten eine periodische Rechteckspannung mit einer Frequenz von 1 bis 1000 Hz und einer Feldstärke von 0,5 bis 50 V/µm anlegt.

**8.** Verfahren gemäß Anspruch 6, dadurch gekennzeichnet, daß man an die Elektroden über einen Zeitraum von 1 Sekunde bis 2 Minuten eine periodische Rechteckspannung mit einer Frequenz von 2 bis 50 Hz und einer Feldstärke von 5 bis 20 V/µm anlegt.

**9.** Verfahren gemäß Anspruch 6, dadurch gekennzeichnet, daß die Schalt- und Anzeigevorrichtung ein zusätzliches Element enthält, welches das Anlegen der kontinuierlichen periodischen Rechteckspannung im routinemäßigen Betrieb ermöglicht.

**Claims**

**1.** A process for the production of a shock-resistant liquid crystal switching and display device in which two connected support plates, at least one of which has an orientation layer,
are provided with electrodes and at least one polarizer and a liquid-crystalline material is poured into the gap between the two support plates, wherein the liquid-crystalline material used is a ferroelectric liquid crystal mixture containing at least one liquid-crystalline base component and furthermore at least one cryptand or coronand and a continuous periodic electric voltage is applied to the electrodes of the switching and display device in the ferroelectric phase before startup, until the liquid crystal layer adopts a "bookshelf" or "quasi-bookshelf" orientation.

**2.** The process as claimed in claim 1, wherein the liquid crystal mixture used contains at least one cryptand or coronand of the general formula (I) or (II)

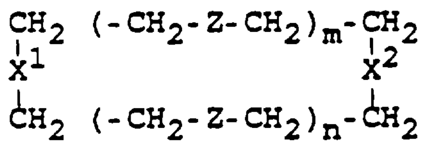

(I)

in which -Z- is -O- or -S- and

m, n are integers greater than zero and
m+n is 2 to 6,
$-X^1-$, $-X^2-$, identical or different, are
-Z-, -NR-,

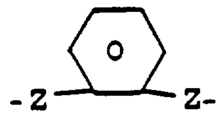 , 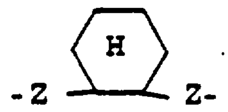

or $-X^1-$, $-X^2-$ together are

$$\rangle N-CH_2(-CH_2-Z-CH_2)_l-CH_2-N\langle$$

or

$$\rangle N-CO(-CH_2-Z-CH_2)_l-CO-N\langle$$

in which

-R is -alkyl or -alkanoyl of 1 to 15 carbon atoms, -phenyl, -benzyl or -benzoyl and
l is 1 or 2;

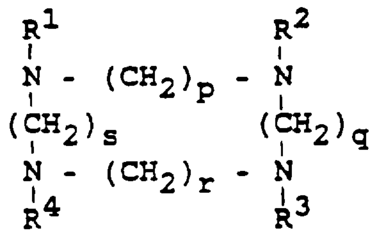 (II)

in which $-R^1$, $-R^2$, $-R^3$ and $-R^4$, independently of one another, are

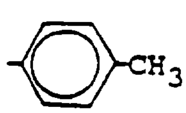 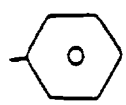 , -H, $-CH_3$, 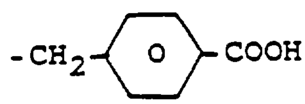

or

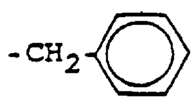

and p, q, r, s, independently of one another, are an integer from 2 to 4, in which p+q+r+s is 8 to 16,

and a periodic square voltage having a frequency of 1 to 1000 Hz and a field strength of 0.5 to 50 V/µm is applied to the electrodes over a period of 0.1 second to 10 minutes.

3. The process as claimed in claim 2, wherein the liquid crystal mixture used contains a compound of the formula (I) in which

Z is an oxygen atom,
m, n are integers greater than zero and
m+n is 2 to 4,
$-X^1-$, $-X^2-$, identical or different, are
-O-, -NR-,

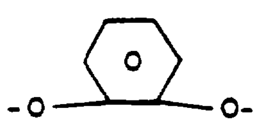 , 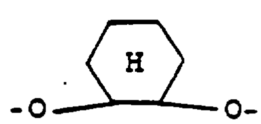

or
$-X^1-$, $-X^2-$ together are

$>N-CH_2(-CH_2-O-CH_2)_1-CH_2-N<$

in which

-R is -alkyl or -alkanoyl of 1 to 15 carbon atoms, -phenyl, -benzyl or -benzoyl and
l is 1 or 2.

4. The process as claimed in claim 2, wherein the liquid crystal mixture used contains a compound of the formula (II) in which
$-R^1 = -R^2 = -R^3 = -H$ and $R^4$ is -H,

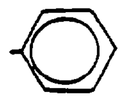 ,

$-CH_3$ or

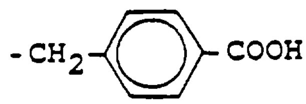

5. The process as claimed in claim 2, wherein a periodic square voltage having a field strength of 5 to 20 V/µm and a frequency of 2 to 50 Hz is applied to the electrodes over a period of 1 second to 2 minutes.

6. A process for regenerating a shock-damaged liquid crystal switching and display device containing two support plates, at least one orientation layer, an adhesive frame, electrodes, at least one polarizer and a liquid-crystalline material, in which the liquid crystal layer was originally present in a "bookshelf" or "quasi-bookshelf" orientation, wherein a liquid crystal layer composed of a ferroelectric liquid crystal mixture consisting of at least one liquid-crystalline base component and furthermore at least one coronand or cryptand is used and a continuous periodic square voltage is applied to the electrodes of the shock-damaged switching and display device.

7. The process as claimed in claim 6, wherein a periodic square voltage having a frequency of 1 to 1000 Hz and a field strength of 0.5 to 50 V/µm is applied to the electrodes over a period of 0.1 second to 10 minutes.

8. The process as claimed in claim 6, wherein a periodic square voltage having a frequency of 2 to 50 Hz and a field strength of 5 to 20 V/µm is applied to the electrodes over a period of 1 second to 2 minutes.

9. The process as claimed in claim 6, wherein the switching and display device contains an additional element which makes it possible to apply the continuous periodic square voltage in routine operation.

**Revendications**

1. Procédé pour la préparation d'un dispositif de commutation et d'affichage à cristal liquide, stable au chocs, deux plaques de support reliées, dont une au moins présente une couche d'orientation, étant munies d'électrodes et d'un au moins polariseur, et remplissant l'espace interstitiel entre les deux plaques-support d'une matière à cristaux liquides, caractérisé en ce qu'on utilise comme matière à cristaux liquides un mélange de cristaux liquides ferroélectriques qui contient au moins un constituant de base à cristaux liquides et de plus, au moins un cryptand ou un coronand, et en appliquant aux électrodes du dispositif de commutation et d'affichage avant la mise en service dans la phase ferroélectrique une tension électrique périodique continue, jusqu'à ce que que la couche de cristal liquide adopte une orientation "bookshelf" ou "quasibookshelf".

2. Procédé selon la revendication 1, caractérisé en ce que le mélange de cristaux liquides utilisé contient au moins un cryptand ou coronand de formule générale (I) ou (II)

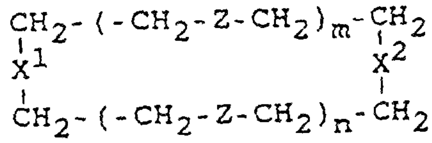 (I)

où

-Z- est égal à -O- ou -S- et
m, n sont des nombres entiers supérieurs à zéro et
m+n va de 2 à 6,
$-X^1-$, $-X^2-$ identiques ou différents, représentent
-Z-, -NR-,

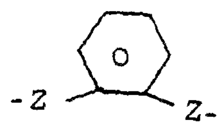 , 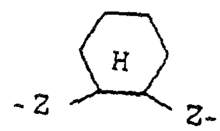

ou
$-X^1-$, $-X^2-$ ensemble, représentent

$$=N-CH_2(-CH_2-Z-CH_2)_1-CH_2-N=$$

ou

$$=N-CO(-CH_2-Z-CH_2)_1-CO-N=$$

où
-R représente alkyle ou alcanoyle avec 1 à 15 atomes de carbone, phényle, benzyle ou benzoyle et
l vaut 1 ou 2 ;

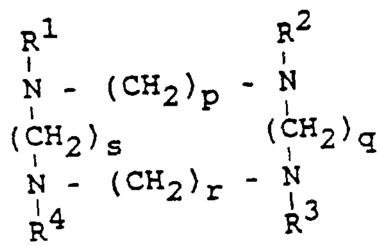 (II)

$-R^1$, $-R^2$, $-R^3$ et $-R^4$, indépendamment les uns des autres, représentent

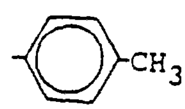

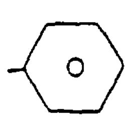 , -H, $-CH_3$, 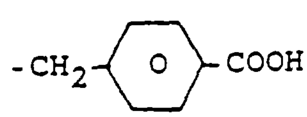 ou 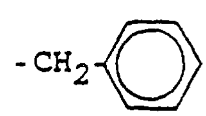

et p, q, r, s, indépendamment les uns des autres, représentent un nombre entier de 2 à 4, p+q+r+s = 8 à 16, et on applique aux électrodes une tension périodique rectangulaire d'une fréquence de 1 à 1000 Hz et d'une intensité de champ de 0,5 à 50 V/µm en l'espace de 0,1 secondes à 10 minutes.

**3.** Procédé selon la revendication 2, caractérisé en ce que le mélange de cristaux liquides utilisé contient un composé de formule (I), où

Z représente un atome d'oxygène,
m, n sont des nombres entiers supérieurs à zéro et $m+n = 2$ à 4,
$-X^1-$, $-X^2-$identiques ou différents, représentent
-O- , -NR- ,

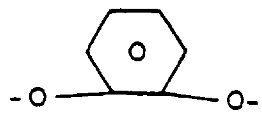 , 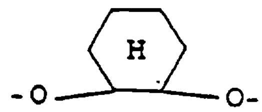

ou
$-X^1-$, $-X^2-$ensemble, représentent

$$=N-CH_2(-CH_2-O-CH_2)_1-CH_2-N=$$

où
-R représente -alkyle ou -alcanoyle avec 1 à 15 atomes de carbone, -phényle, -benzyle ou -benzoyle, et
l vaut 1 ou 2.

**4.** Procédé selon la revendication 2, caractérisé en ce que le mélange de cristaux liquides utilisé contient un composé de formule (II), où
$-R^1 = -R^2 = -R^1 = -H$ et $R^4$ égal à -H,

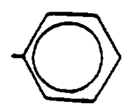 ,

$-CH_3$ ou

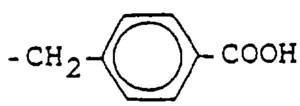

**5.** Procédé selon la revendication 2, caractérisé en ce qu'on applique aux électrodes en l'espace de 1 seconde à 2 minutes une tension rectangulaire périodique avec une intensité de champ de 5 à 20 V/µm et une fréquence de 2 à 50 Hz.

**6.** Procédé pour la régénération d'un dispositif de commutation et d'affichage à cristal liquide, victime de choc, qui comporte deux plaques-support, au moins une couche d'orientation, un cadre adhésif, des électrodes, au moins un polariseur et une matière à cristaux liquides, et dans laquelle la couche de cristaux liquides se trouve initialement en une orientation "bookshelf" ou "quasibookshelf", caractérisé en ce qu'on utilise une couche de cristaux liquides qui se compose d'un mélange de cristaux liquides ferroélectriques qui est constitué d'au moins un constituant de base à cristaux liquides et en outre, d'au moins un coronand ou cryptand, et on applique aux électrodes du dispositif de commutation et d'affichage victime de choc une tension rectangulaire périodique continue.

**7.** Procédé selon la revendication 6, caractérisé en ce qu'on applique aux électrodes, en l'espace de 0,1 secondes a 10 minutes, une tension rectangulaire périodique ayant une fréquence de 1 à 1000 Hz et une intensité de champ de 0,5 à 50 V/µm.

**8.** Procédé selon la revendication 6, caractérisé en ce qu'on applique aux électrodes en l'espace de 1 seconde à 2 minutes une tension rectangulaire périodique ayant une fréquence de 2 à 50 Hz et une intensité de champ de 5 à 20 V/µm.

**9.** Procédé selon la revendication 6, caractérisé en ce que le dispositif de commutation et d'affichage contient un élément supplémentaire, qui permet d'appliquer la tension rectangulaire périodique dans un service de routine.

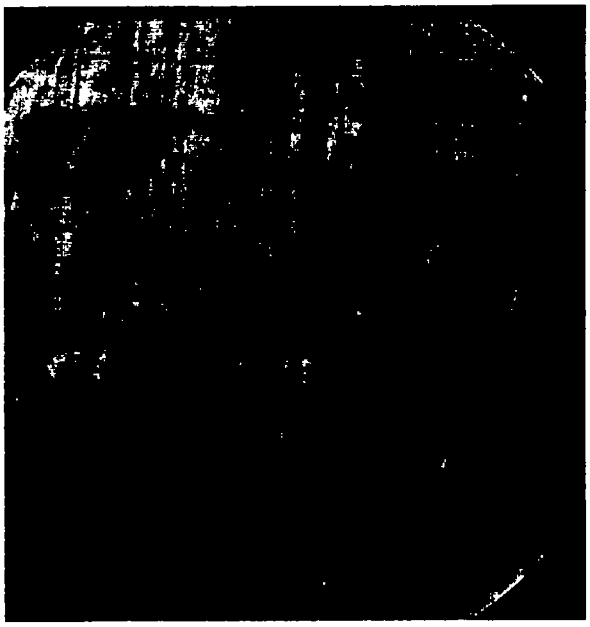

Fig. 1a

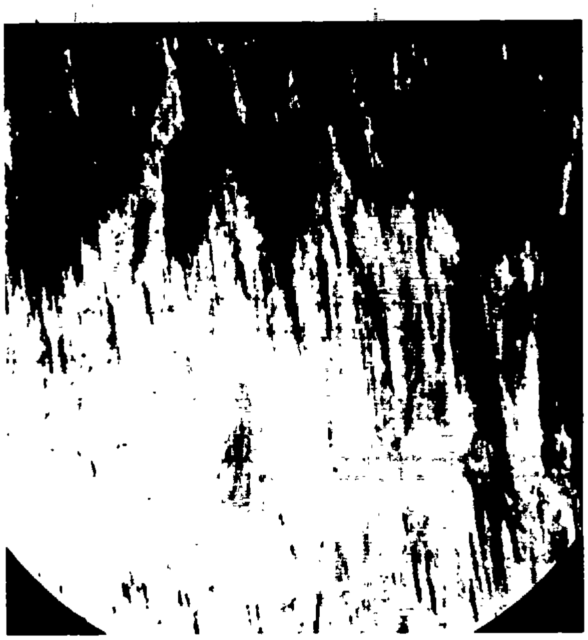

Fig. 1b

Fig. 2a

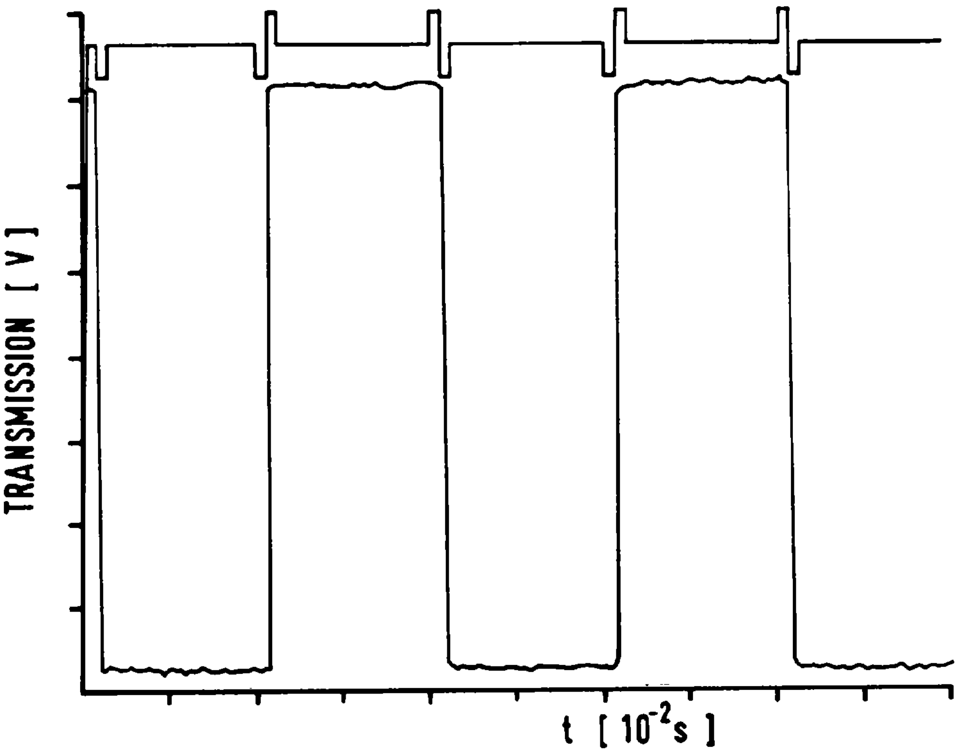


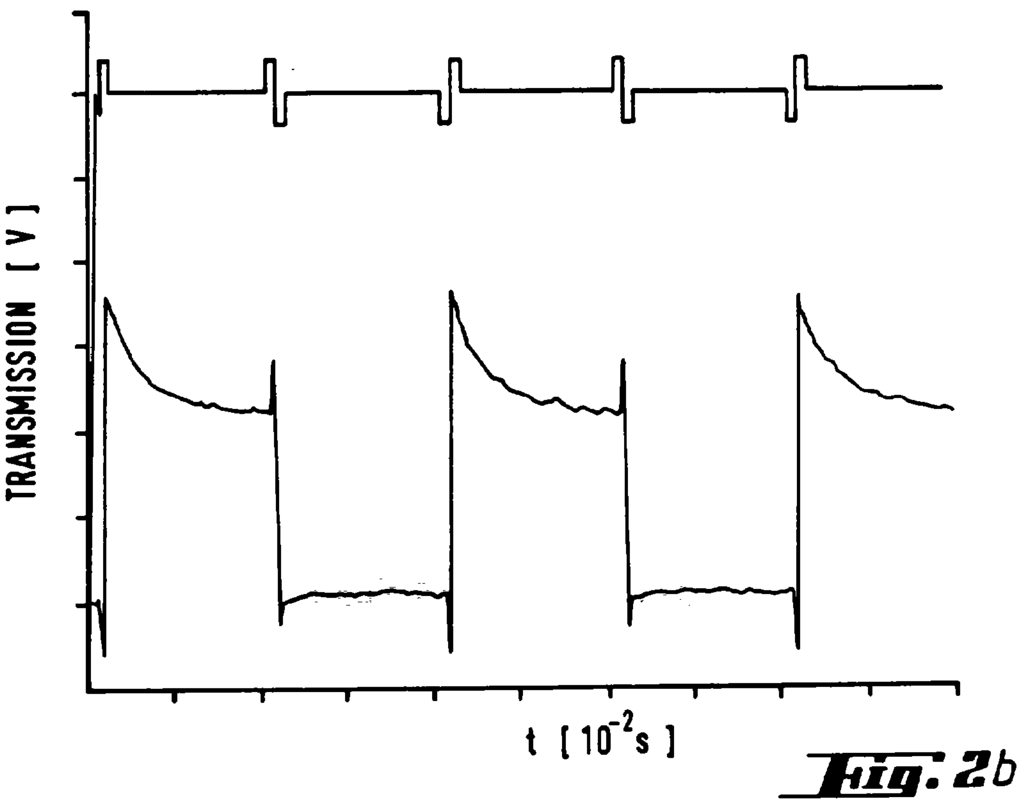


Fig. 2b

a1

a2

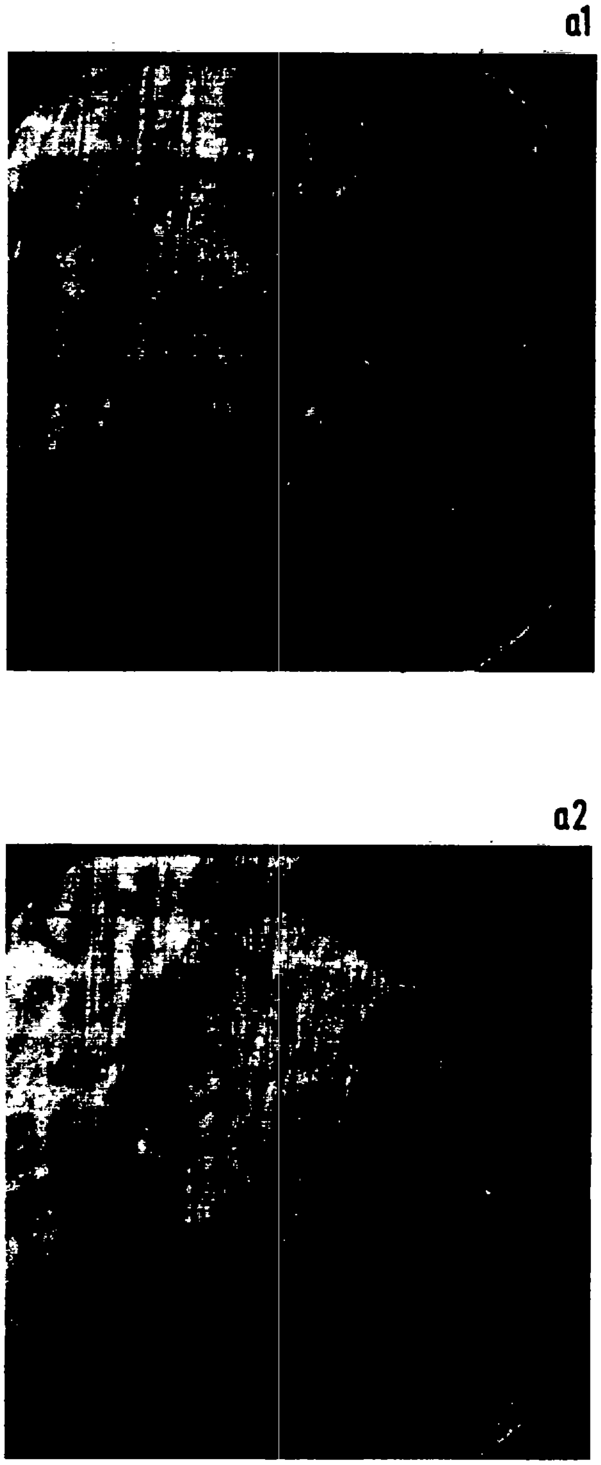

Fig. 3a

a3

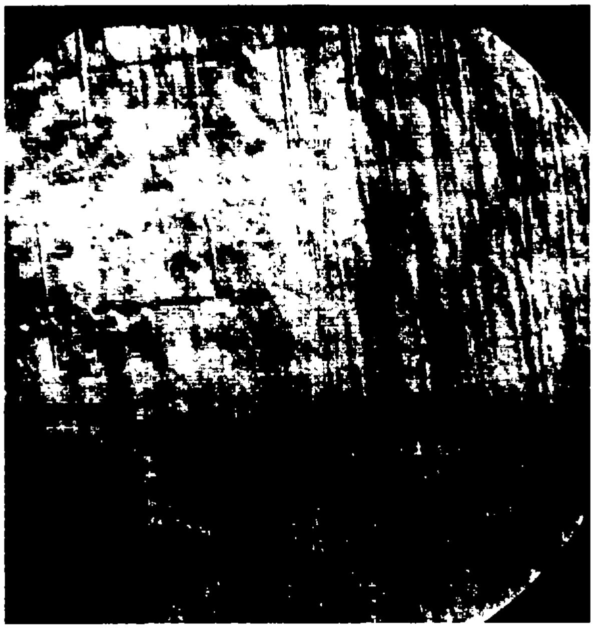

a4

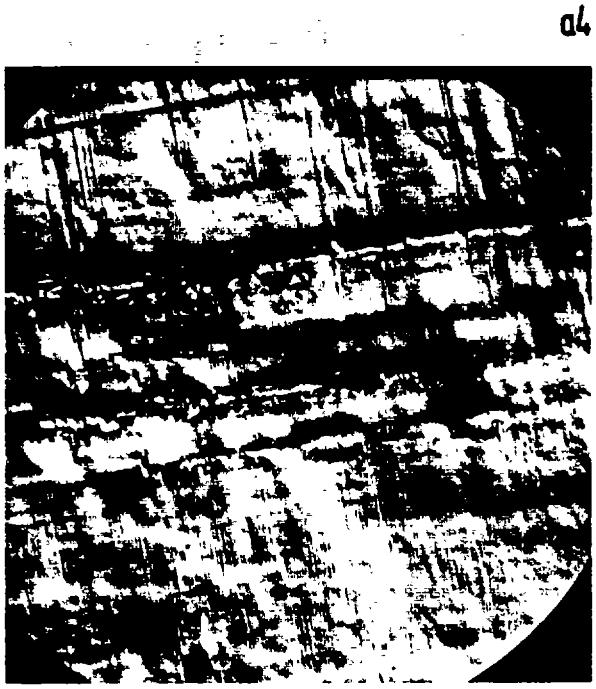

Fig. 3a

a5

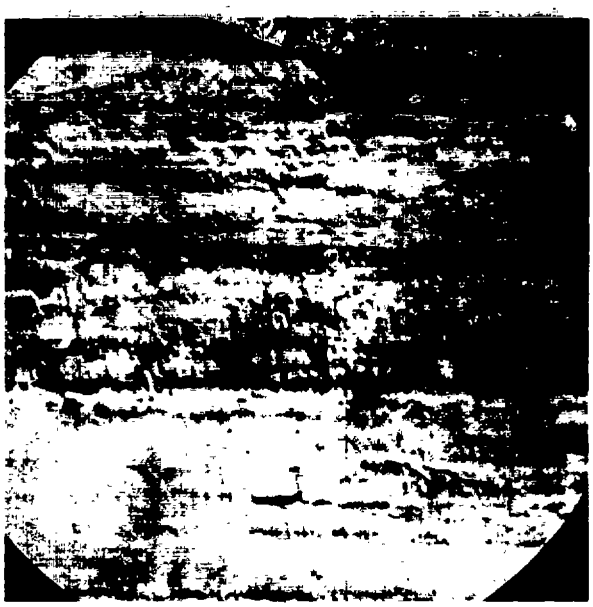

Fig. 3a

b1

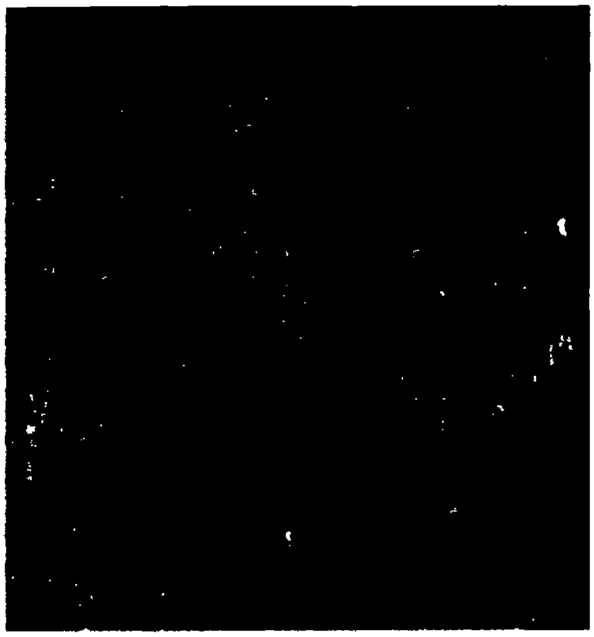

b2

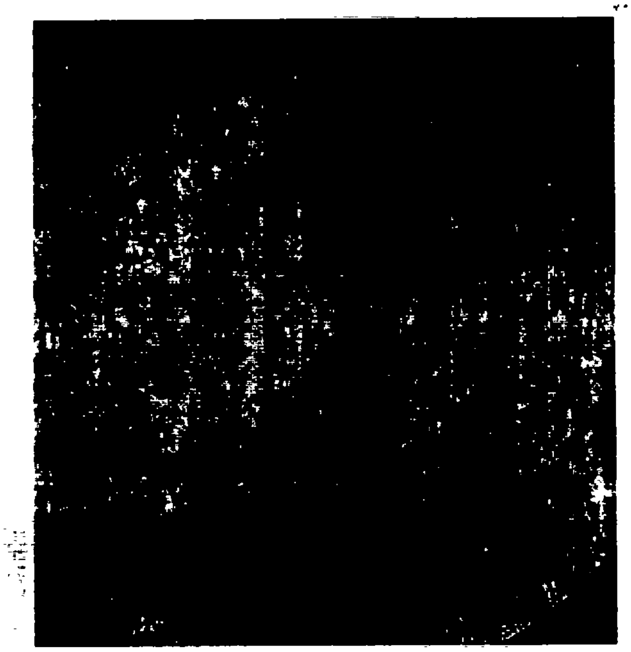

Fig. 3b

b3

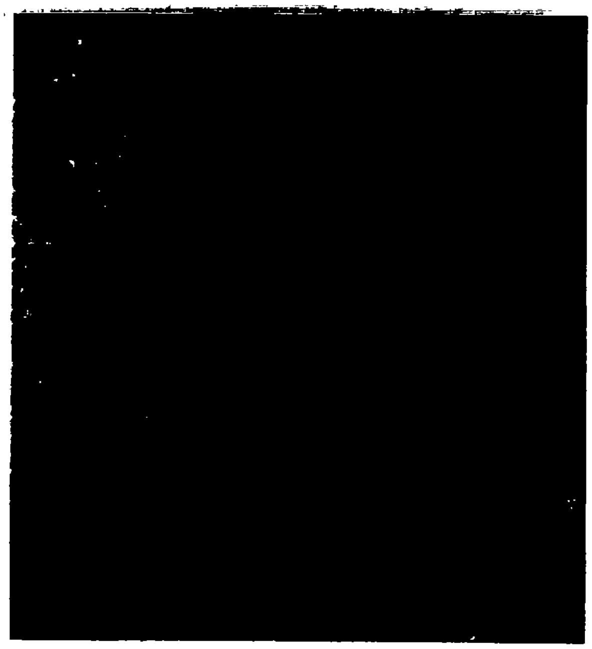

b4

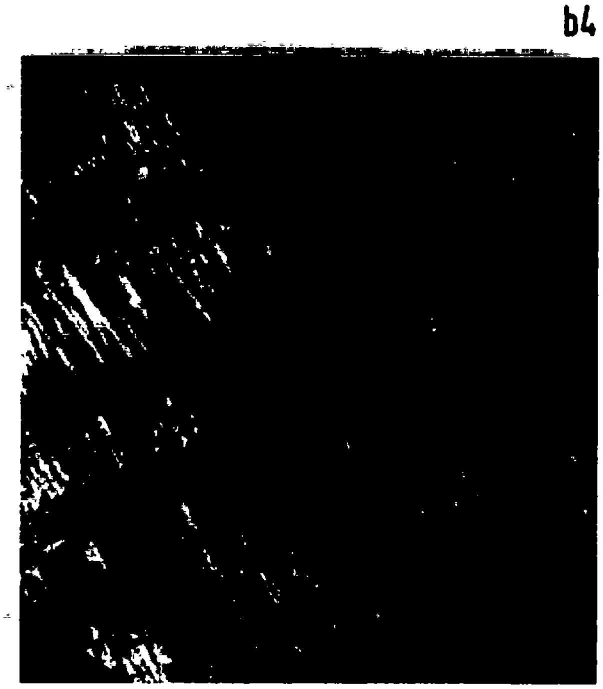

Fig. 3b

b5

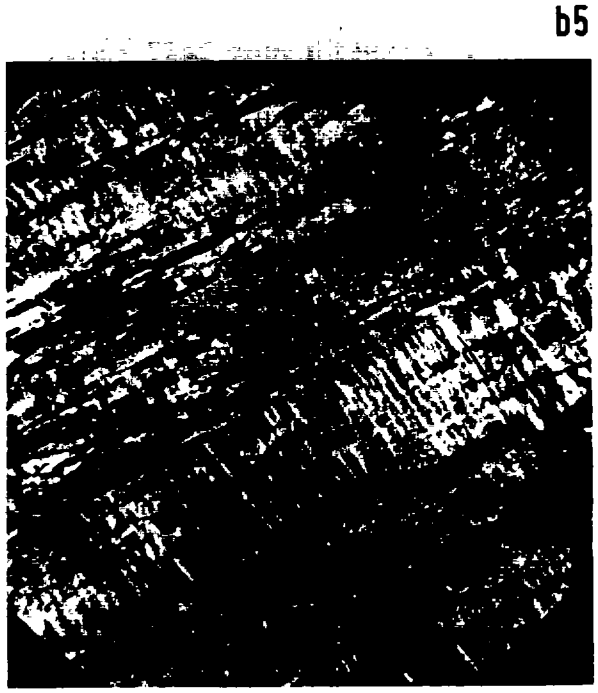

Fig. 3b

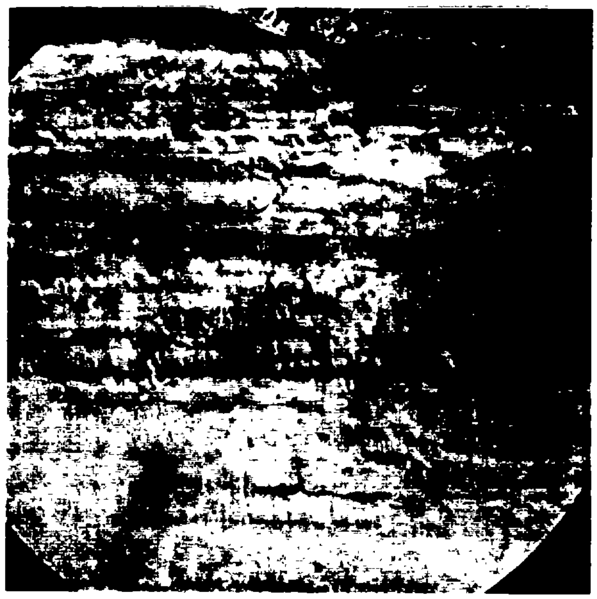

Fig. 4a

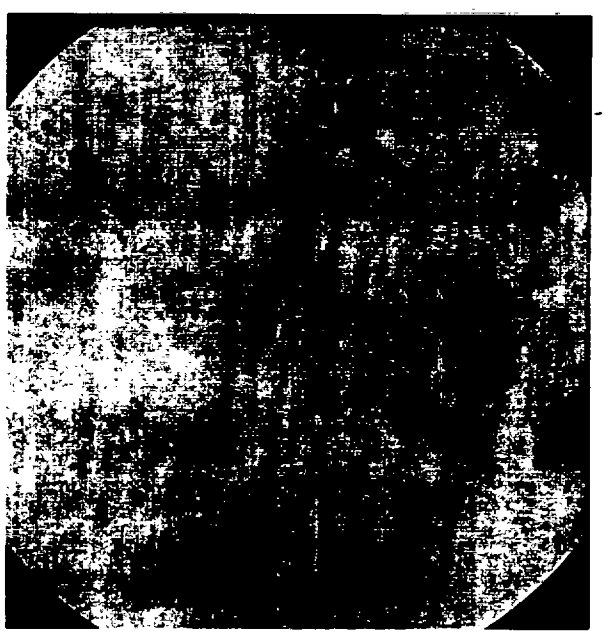

Fig. 4b

Fig. 5a

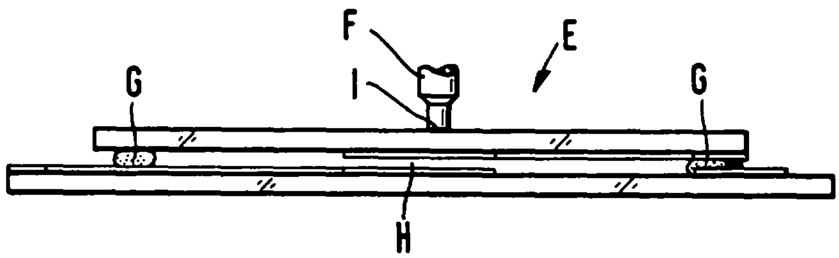


Fig. 5b

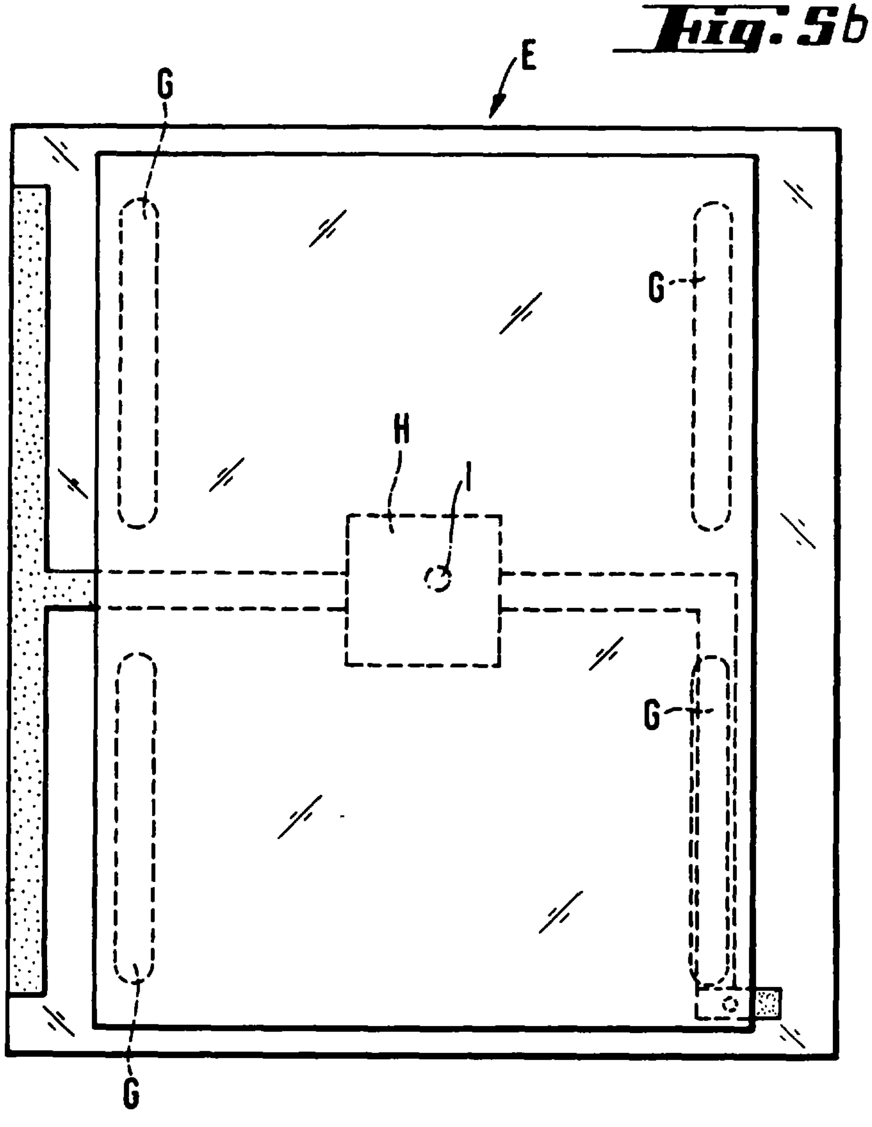

Fig. 6